(19) Europäisches Patentamt
European Patent Office
Office européen des brevets

(11) EP 0 773 431 A2

(12) EUROPÄISCHE PATENTANMELDUNG

(43) Veröffentlichungstag:
14.05.1997 Patentblatt 1997/20

(51) Int. Cl.$^6$: G01F 1/66

(21) Anmeldenummer: 96117445.5

(22) Anmeldetag: 30.10.1996

(84) Benannte Vertragsstaaten:
AT CH DE DK ES FR GB IT LI NL

(30) Priorität: 13.11.1995 DE 19542232

(71) Anmelder: SIEMENS AKTIENGESELLSCHAFT
80333 München (DE)

(72) Erfinder:
• Himmelsbach, Thomas
  76137 Karlsruhe (DE)
• Russwurm, Winfried
  93049 Regensburg (DE)
• Kroemer, Nils
  09337 Hohenstein-Ernstthal (DE)

(54) **Ultraschalldurchflussmesser für flüssige oder gasförmige Medien**

(57)     Die Erfindung betrifft einen Ultraschalldurch-flußmesser für flüssige oder gasförmige Medien mit zumindest zwei Ultraschallwandlern (2, 3, 4), die an ein von dem Meßmedium durchflossenes Rohr (1) angebracht sind, mit einer Ansteuer- und Auswerteeinheit, durch welche die Ultraschallwandler (2, 3, 4) als Sender und/oder Empfänger betrieben werden und durch welche aus den Ultraschallsignalen die Wanddicke des Rohres (1) und der Durchfluß berechnet werden. Zur Anbringung der Ultraschallwandler (2, 3, 4) ist ein Meß-rohr vorhanden, das als Bestandteil des Ultraschall-durchflußmessers in das vom Meßmedium durch-flossene Rohr eingesetzt ist und Aufnahmestellen auf-weist, auf welche zumindest der Ultraschallwandler (4) für Wanddickenmessung eben aufgesetzt ist. Zur Scha-densfrüherkennung kann bei Unterschreiten einer vor-gegebenen Mindestwanddicke ein Alarmsignal ausgegeben werden, und die gemessene Wanddicke kann vorteilhaft in die Berechnung des Durchflusses einbezogen werden.

Die Erfindung wird angewandt bei Ultraschalldurch-flußmessern.

FIG 1

EP 0 773 431 A2

# Beschreibung

Die Erfindung bezieht sich auf einen Ultraschalldurchflußmesser für flüssige oder gasförmige Medien nach dem Oberbegriff des Anspruchs 1.

Aus der WO 88/08516 ist ein Ultraschalldurchflußmesser bekannt, der aus zwei Befestigungseinheiten mit Ultraschallwandlern besteht, die in Abstand voneinander an einem Rohr, das von einem Meßmedium durchflossen wird, angebracht sind. Die zweite Befestigungseinheit ist in Strömungsrichtung hinter der ersten so angeordnet, daß ein Ultraschallimpuls, der von einem Ultraschallwandler in der ersten Befestigungseinheit ausgesendet wird, durch das Medium hindurch auf einen Ultraschallwandler in der zweiten Befestigungseinheit trifft. Abwechselnd werden pulsförmige Ultraschallsignale stromab und stromauf übertragen. Durch den Mitführungseffekt im strömenden Medium ist die Signallaufzeit stromab kleiner als stromauf. Die Differenz beider Laufzeiten ist ein Maß für die Strömungsgeschwindigkeit. Mit der Kenntnis des Innenrohrquerschnitts wird der aktuelle Volumenstrom ermittelt. Bei der Durchflußmessung korrosiver oder abrasiver Flüssigkeiten und Gase, welche beispielsweise in der chemischen Industrie häufig auftreten, kann es mit der Zeit zu Abtragungserscheinungen an der Innenwand des Rohres kommen. Die Änderung der Rohrwanddicke, sei es als Verringerung durch Abtragung oder als Erhöhung durch Ablagerungen, führt zu einer Änderung des Innenquerschnitts und somit zu einem entsprechenden Meßfehler. Zur Vermeidung dieses Fehlers ist in der ersten Befestigungseinheit ein weiterer Ultraschallwandler zur Messung der Wanddicke des Rohres vorhanden. Da der Außendurchmesser des Rohres leicht meßbar ist, kann mit der Kenntnis der Wanddicke in einfacher Weise auf den Innenquerschnitt des Rohres geschlossen werden. Zur Steuerung der bei der Ultraschalldurchfluß- und Wanddickenmessung erforderlichen Meßschritte ist eine Ansteuer- und Auswerteeinheit vorhanden, durch welche aus den Ultraschallsignalen die Wanddicke des Rohres und der Durchfluß berechnet werden. Nähere Einzelheiten zum Funktionsprinzip sind der genannten internationalen Patentanmeldung zu entnehmen. Bei dem bekannten Ultraschalldurchflußmesser nach dem Clamp-on-Verfahren wird mittels eines auf das Rohr aufgesetzten Ultraschallwandlers ein pulsförmiges akustisches Signal in das Rohr gesendet, an der Grenzfläche Meßrohrwand/Medium reflektiert und vom Ultraschallwandler wieder empfangen. Die Wanddicke d ergibt sich bei senkrechter Durchschallung zu $d = c(T) \cdot t/2$, mit T als Temperatur, $c(T)$ als temperaturabhängige Schallausbreitungsgeschwindigkeit in der Wand und t als der gemessenen Laufzeit des Ultraschallsignals. Nachteilig bei dem bekannten Ultraschalldurchflußmesser ist, daß die mit dem Clamp-on-Verfahren erreichbare Meßgenauigkeit für viele Anwendungen in der Prozeßtechnik nicht ausreicht, so daß das Verfahren nur in wenigen ausgewählten Fällen zum Einsatz kommt. Die Verwendung von wandlerseitigen Vorlaufkörpern ist zudem nachteilig wegen der zusätzlichen Störreflexionen, die an der Grenzfläche Vorlaufkörper/Rohrmaterial entstehen. Insbesondere bei kleinen Wanddicken, die im Bereich der Schallwellenlänge im Rohrmaterial liegen, können sich diese Reflexionen mit der eigentlichen Reflexion an der Grenzfläche Rohrwand/Medium in einer Weise überlagern, welche die Wanddickenmessung stark verfälscht. Weiterhin ist beim Clamp-on-Verfahren nachteilig, daß aufgrund der Ankopplung an ein normales Rohr häufig die Oberfläche durch Lack oder Korrosion verschmutzt ist. Auch die Rauhigkeit einer nicht speziell vorbereiteten Oberfläche führt dazu, daß eine dicke Schicht zur akustischen Kopplung zwischen Ultraschallwandler und Rohr aufgebracht werden muß. Damit ist zwangsläufig ein Verlust akustischer Energie verbunden. Da normale Rohre üblicherweise eine gekrümmte Oberfläche aufweisen, kann diese auch nicht ohne weiteres plangeschliffen werden, um eine saubere, ebene Aufnahmestelle zu erhalten.

Aus der DE-PS 43 36 370 ist ein Ultraschalldurchflußmesser mit einem Meßrohr bekannt, das von dem Meßmedium durchflossen wird. Ein Paar von Ultraschallwandlern ist in Flußrichtung hintereinander an der Meßrohrwand so angeordnet, daß sie Ultraschallpulse senkrecht zur Flußrichtung in das Meßmedium ausstrahlen bzw. von diesem empfangen. Der Schallstrahl wird über Reflektoren, welche in die Meßrohrwand eingebracht sind, zwischen den beiden Ultraschallwandlern geführt. Die Funktion des Reflektors kann auch durch eine entsprechend geformte Meßrohrwand übernommen werden. Bei diesem bekannten Ultraschalldurchflußmesser ist vorteilhaft, daß aufgrund der Verwendung eines speziellen Meßrohres eine gute akustische Ankopplung der Ultraschallwandler an das Meßmedium gewährleistet werden kann und daß das Meßsignal aufgrund einer spiralförmigen Führung des Schallstrahls einen integralen Wert für die Strömungsgeschwindigkeit über den Meßrohrquerschnitt liefert. Die Meßgenauigkeit hängt somit nicht von der Art des Meßmediums und dem Strömungsprofil ab. Dieser Ultraschalldurchflußmesser hat jedoch den Nachteil, daß geometrieabhängige Kalibrierfaktoren bei Veränderungen des Innenrohrquerschnitts nicht nachgeführt werden und somit Meßfehler verursachen können.

Der Erfindung liegt die Aufgabe zugrunde, einen Ultraschalldurchflußmesser für flüssige oder gasförmige Medien mit verbesserter Meßgenauigkeit zu schaffen, der auch für Meßrohre mit kleinem Querschnitt geeignet ist.

Zur Lösung dieser Aufgabe weist der neue Ultraschalldurchflußmesser der eingangs genannten Art die im kennzeichnenden Teil des Anspruchs 1 genannten Merkmale auf. In den Unteransprüchen sind vorteilhafte Weiterbildungen angegeben.

Die Erfindung hat den Vorteil, daß mit geringem Aufwand eine Verbesserung der Meßgenauigkeit erzielt wird. Die Wanddicke des Meßrohres kann periodisch in vorgegebenen Zeitabständen gemessen werden. Dazu kann einer der Ultraschallwandler benutzt werden, die ohnehin für die Ultraschalldurchflußmessung nach dem Prinzip der Laufzeitmessung vorhanden sind. Vorteilhaft erfolgt die Wanddickenmessung mit einem weiteren Ultraschallwandler, der ebenfalls nach dem Laufzeitprinzip arbeitet und auf diese Messung optimiert ist. Für die Laufzeitmessung zur Wanddicken- und zur Durchflußmessung können im wesentlichen dieselben elektronischen Schaltungskomponenten genutzt werden. Die Kenntnis der Rohrwanddicke kann zum einen zu Überwachungszwecken, beispielsweise zur Ausgabe einer Alarmmeldung bei Unterschreitung einer aus Sicherheitsgründen vorgegebenen Mindestwanddicke, bei der die Druckfestigkeit des Meßrohres nicht mehr gewährleistet ist, und zum anderen zur automatischen Nachführung der vom Innenquerschnitt des Rohres abhängigen Durchflußkalibrierwerte herangezogen werden. Damit wird eine verbesserte Meßgenauigkeit und eine höhere Prozeßsicherheit erreicht. Zudem kann neben der Meßgröße des Durchflusses auch die gemessene Wanddicke als Prozeßgröße ausgegeben werden, so daß beide Meßaufgaben innerhalb eines einzigen Geräts mit geringem Mehraufwand kombiniert sind. Da ein speziell für den Ultraschalldurchflußmesser geschaffenes Meßrohr verwendet wird, können vorbereitete, ebene Aufnahmestellen für die Ultraschallwandler an diesem Meßrohr geschaffen werden, die eine gute akustische Ankopplung gewährleisten. Dabei können auch bei Rohren mit kleineren Querschnitten, bei denen im Clamp-on-Verfahren nur kleine Ultraschallwandler aufgesetzt werden können, durch geeignete Wahl der Querschnittsform des Meßrohrs, beispielsweise bei einem quadratischen Querschnitt, große ebene Aufnahmestellen für große Ultraschallwandler mit besseren Abstrahleigenschaften benutzt werden. Dadurch werden ebenso die Meßergebnisse verbessert wie durch den integrierten Aufbau, der mit einem Meßrohr möglich ist. Die Ultraschallwandler sind in dasselbe Gehäuse integrierbar, in dem sich auch die Ansteuer- und Auswerteeinheit befindet und dessen eine Seitenwand durch das Meßrohr gebildet wird. Verschmutzung oder Korrosion des Rohres können sich somit nicht negativ auf die Meßeigenschaften auswirken. Komponenten zum Andrücken der Ultraschallwandler an das Meßrohr können in den Aufbau des Ultraschallwandlers integriert werden und müssen nicht extern, wie es beim Clamp-on-Verfahren erforderlich ist, am Rohr befestigt werden. Wenn das Gerät besonderen Anforderungen, beispielsweise des Explosionsschutzes, genügen soll, können diese ohne besondere Schwierigkeiten erfüllt werden, da alle Komponenten des Ultraschalldurchflußmessers wie auch der Wanddickenmessung in einem einzigen Gehäuse integrierbar sind. Zur Schadensfrüherkennung kann ein Alarmsignal bei Unterschreiten einer Mindestdicke der Rohrwand durch den Ultraschalldurchflußmesser selbst ausgegeben werden oder dieser liefert die Wanddicke als Prozeßgröße, die in einer übergeordneten Prozeßsteuerung auf Toleranzeinhaltung überwacht wird.

Anhand der Zeichnungen, in denen Ausführungsbeispiele der Erfindung dargestellt sind, werden im folgenden die Erfindung sowie Ausgestaltungen und Vorteile näher erläutert.

Es zeigen:

Figur 1  ein Schnittbild durch einen Ultraschalldurchflußmesser mit integrierter Wanddickenmessung,

Figur 2  ein Schnittbild durch einen Ultraschallwandler mit Vorlaufkörper zur Wanddickenmessung,

Figur 3  ein Zeitdiagramm der Schallpulse des Ultraschallwandlers nach Figur 2,

Figur 4  einen Ultraschallwandler mit Meßkörper zur Wanddickenmessung,

Figur 5  einen Ultraschallwandler mit Isolierscheibe,

Figur 6  eine Anordnung mit zwei Ultraschallwandlern zur Wanddickenmessung und

Figur 7  ein elektrisches Funktionsschaltbild eines Ultraschalldurchflußmessers.

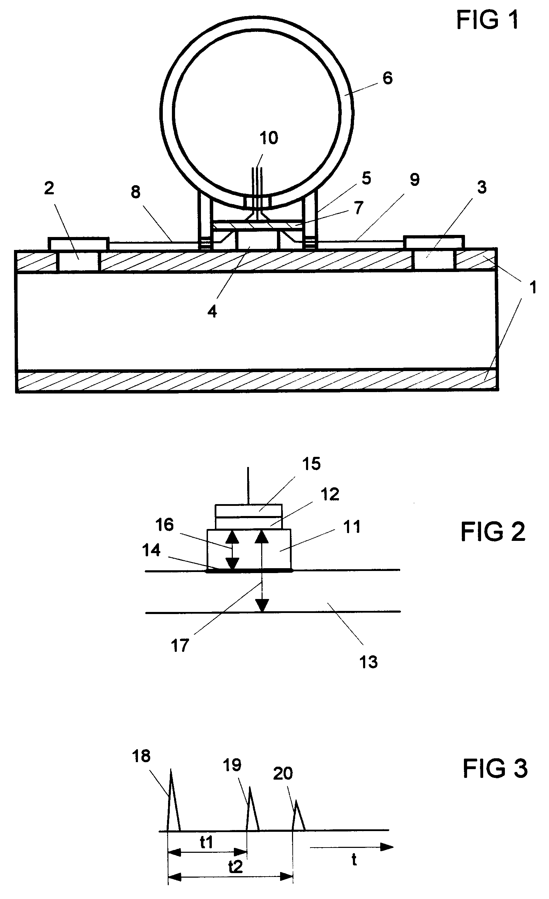

Ein Ultraschalldurchflußmesser mit integrierter Wanddickenmessung besteht gemäß Figur 1 aus einem Meßrohr 1, das mit zwei in Fließrichtung des Meßmediums hintereinander angeordneten Ultraschallwandlern 2 und 3 versehen ist. An der Wandinnenseite des Meßrohres 1 vorhandene Reflektoren sind in Figur 1 nicht dargestellt. Möglichkeiten zu ihrer Gestaltung sind der bereits angeführten DE-PS 43 36 370 zu entnehmen. Ein Ultraschallwandler 4 zur Wanddickenmessung ist als separates Sensorelement innerhalb eines Verbindungsstückes 5 zwischen dem Meßrohr 1 und einem Gehäuse 6 angeordnet, in dem sich eine hier nicht gezeigte Ansteuer- und Auswerteeinheit befindet. Für eine gute akustische Ankopplung des Ultraschallwandlers 4 an das Meßrohr 1 können beide durch eine Klebung untrennbar miteinander verbunden werden. Der Ultraschallwandler 4 ist in diesem Fall fester Bestandteil des Meßrohres 1. In der in Figur 1 gezeigten Variante wird dagegen der Ultraschallwandler 4 durch einen Klemmring 7 im Verbindungsstück 5 gegen die Außenwand des Meßrohres 1 gedrückt. Da der Ultraschallwandler 4 und der Klemmring 7 im Verbindungsstück 5, das auch als Teil des Gehäuses 6 betrachtet werden kann, integriert sind, erhält man einen gekapselten Einbau, der kein gesondertes Gehäuse für den Ultraschallwandler 4 der Wanddickenmessung erfordert und somit modular, kostengünstig, explosionssicher und druckfest ausgelegt werden kann. Durch das feste Andrücken des Ultraschallwandlers 4 mit dem Klemmring 7 wird ebenfalls eine gute akustische Ankopplung an das Meßrohr 1 erreicht. Die Aufnahmestelle für den Ultraschallwandler 4 an der Außenwand des Meßrohrs 1 kann beispielsweise an kritischen Bereichen des Meßrohres vorbestimmt werden. Sie ist eben ausgeführt und so bearbeitet, daß eine optimale akustische Kopplung möglich ist. Dies wirkt sich positiv auf die Meßgenauigkeit aus. Da das Meßrohr 1 einen quadratischen Innenquerschnitt aufweist, läßt sich die Wanddickenmessung auch bei kleinen Nennwerten mit hoher Genauigkeit realisieren. Der Ultraschallwandler 4 zur Wanddickenmessung ist vorzugsweise im Bereich der Symmetrieachsen des Meßrohrs 1, bei diesem Ausführungsbeispiel mit einem quadratischen Meßrohr 1, mittig auf einer ebenen Oberfläche mit senkrecht zu dieser verlaufender Schallausbreitungsrichtung aufgesetzt. Bei runden Meßrohren beträgt das Verhältnis von Meßrohrdurchmesser zum Durchmesser des Ultraschallwandlers der Wanddickenmessung vorzugsweise mehr als 5. Der Meßwert der Wanddicke wird als Eingangsgröße für einen in der Auswerteeinheit abgelegten Korrekturalgorithmus zur Nachführung der Kalibrierwerte des Ultraschalldurchflußmessers verwendet. Es können mehrere Ultraschallwandler zur Wanddickenmessung über den Umfang und die Länge des Meßrohres verteilt angeordnet sein, wobei die Aktivierung der einzelnen Meßstellen von der Ansteuer- und Auswerteeinheit gesteuert wird. Vorteilhaft ist an der Ansteuer- und Auswerteeinheit eine Schnittstelle vorhanden, an welche vom Anwender ein zusätzlicher, externer Ultraschallwandler zur Wanddickenmessung angeschlossen werden kann. Dieser Ultraschallwandler kann zur Überwachung des Rohrs, in welches das Meßrohr zur Ultraschalldurchflußmessung eingesetzt ist, dienen. Wenn der Wanddickenmeßwert eines der vorhandenen Ultraschallwandler eine vorgegebene Mindestwanddicke unterschreitet, wird von der Ansteuer- und Auswerteeinheit ein Alarmsignal erzeugt. Dadurch ist eine Schadensfrüherkennung möglich, und die Anlagensicherheit wird erheblich verbessert. Über Leitungen 8, 9 und 10 sind die Ultraschallwandler 2, 3 bzw. 4 mit der Ansteuer- und Auswerteeinheit verbunden.

In Figur 2 ist ein Aufbau eines Ultraschallwandlers zur Wanddickenmessung mit einem Vorlaufkörper 11 dargestellt. Eigentlicher Ultraschallwandler ist eine Piezokeramikscheibe 12, die mit dem Vorlaufkörper 11 zur akustischen Kopplung fest verbunden ist. Der Vorlaufkörper 11 seinerseits ist mit der Wand eines Meßrohrs 13 durch eine Klebeschicht 14 akustisch gekoppelt. Die Rückseite der Piezokeramikscheibe 12 ist mit einem sogenannten Backing 15 versehen, das zur Schalldämpfung und Entkopplung der Piezokeramikscheibe 12 von der übrigen Umgebung des Ultraschallwandlers dient. Durch den Vorlaufkörper 11 wird der Schallaufweg erhöht. Auf diese Weise wird gewährleistet, daß das Empfangssignal außerhalb der Abklingzeit des Sendevorgangs an der Piezokeramikscheibe 12 eintrifft. Das Verhältnis von Schallaufweg zur Schallwellenlänge sollte für eine gute Meßgenauigkeit größer als 2 sein. Anstelle des Vorlaufkörpers 11 kann auch eine lokale Erhöhung oder Verdickung an der Meßrohrwand vorgesehen werden. Ein Vorlaufkörper 11 oder eine derartige Verdickung ist also nur sinnvoll, wenn der Schallaufweg in der Wand des Meßrohrs 13 kurz ist und um einen Schallaufweg 16 zu einem gesamten Schallaufweg 17 vergrößert werden sollte.

Figur 3 zeigt qualitativ ein Zeitdiagramm der am Ort der Piezokeramikscheibe 12 (Figur 2) auftretenden Schallimpulse. Nach einem Sendeimpuls 18 trifft zunächst, um die Zeit t1 verzögert, ein Echo 19 bei der Piezokeramikscheibe 12 ein, das von der Grenzfläche zwischen Vorlaufkörper 11 und Wand des Meßrohrs 13 herrührt. Eine Zeit t2 nach dem Sendeimpuls 18 vergeht, bis ein Echo 20 von der Grenzfläche Meßrohrinnenwand/Meßmedium empfangen wird. Ausgewertet wird die Laufzeitdifferenz t2 - t1 zwischen den beiden Echos 19 und 20, welche die Wanddicke widerspiegelt. Es gilt:

$$d = (t2 - t1) \cdot c(T)/2$$

mit

d        - Wanddicke und
c(T)      - Schallgeschwindigkeit im Meßrohr.

Die Schallgeschwindigkeit c(T) kann im Rahmen der Gerätekalibrierung bestimmt werden; durch Messung der Temperatur T kann die Temperaturabhängigkeit der Schallgeschwindigkeit korrigiert werden.

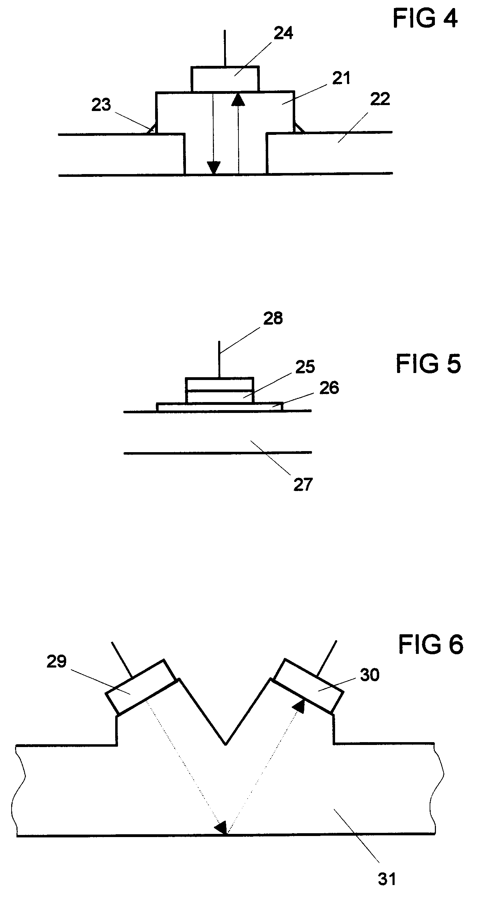

Bei dem Ultraschallwandler zur Wanddickenmessung nach Figur 4 ist ein Meßkörper 21 nach Art eines Stopfens in eine Öffnung einer Wand eines Meßrohrs 22 eingesetzt. Der Meßkörper 21 schließt bündig mit der Innenwand des Meßrohrs 22 ab. An der Außenseite ragt er kragenförmig über den Öffnungsdurchmesser hinaus und setzt auf der Außenwand des Meßrohrs 22 auf. Durch eine umlaufende Schweißnaht 23 ist der Meßkörper 21 mit dem Meßrohr 22 fest verbunden und die Öffnung druckdicht abgeschlossen. An der Oberseite des Meßkörpers 21 ist eine Piezokeramikscheibe 24 akustisch angekoppelt. Damit eine für das Meßrohr 22 repräsentative Messung der Wanddicke erhalten wird, bestehen Meßkörper 21 und Meßrohr 22 vorzugsweise aus demselben Material oder haben zumindest vergleichbare abrasive Eigenschaften. Da die Höhe des Meßkörpers 21 größer als die Dicke des Meßrohrs 22 ist, wird auch bei dieser Ausführungsform eines Ultraschallwandlers eine Verlängerung des Schallaufwegs erreicht, die sich, wie bereits für das Ausführungsbeispiel nach Figur 2 beschrieben wurde, vorteilhaft auf die Meßgenauigkeit auswirkt.

Figur 5 zeigt einen Aufbau eines Ultraschallwandlers, bei welchem eine Piezokeramikscheibe 25 durch eine Isolierscheibe 26, beispielsweise eine Scheibe aus keramischem Material, die dünner als die Piezokeramikscheibe 25 ist, von der Wand eines Meßrohrs 27 galvanisch entkoppelt wird. Diese galvanische Entkopplung ist von Vorteil, wenn die Piezokeramikscheibe 25 auf ihrer Unterseite eine Elektrode aufweist, die ohne eine Isolierscheibe 26 mit dem Meßrohr 27 kurzgeschlossen wäre. Da in einem Ultraschalldurchflußmesser mehrere derartige Ultraschallwandler am Meßrohr 27 angebracht sind, würde über das elektrisch leitende Meßrohr 27 eine Schleife entstehen, die die untere Elektrode der Ultraschallwandler und eventuell weitere am Rohr befindliche Meßumformer galvanisch miteinander verbindet. Dies würde zu Störungen des Meßsignals führen, die somit durch die Isolierscheibe 26 verhindert werden.

Eine Wanddickenmessung kann gemäß Figur 6 auch mit einem Paar von Ultraschallwandlern 29 und 30 durchgeführt werden, wobei der Ultraschallwandler 29 als Sender und der Ultraschallwandler 30 als Empfänger betrieben wird. Sie sind nebeneinander schräg zur Wand eines Meßrohrs 31 in einer Weise angeordnet, daß die Amplitude des empfangenen Ultraschallsignals bei der Ausgangswanddicke maximal wird. Dieser Aufbau ist zwar aufwendiger als der Aufbau der vorher beschriebenen Ausführungsbeispiele, es wird jedoch erreicht, daß mit dem Empfangswandler 30 bereits auswertbare Empfangssignale gewonnen werden können, wenn die Abklingzeit des Sendevorgangs im Sendewandler 29 noch nicht abgeschlossen ist.

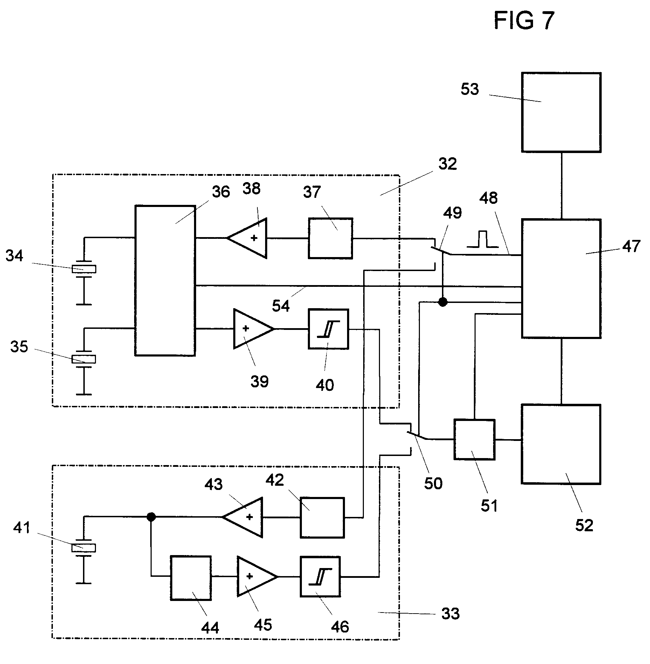

Elektronische Komponenten eines Ultraschalldurchflußmessers mit integrierter Wanddickenmessung sind im wesentlichen eine Durchflußmeßeinheit 32, eine Wanddickenmeßeinheit 33, die in Figur 7 jeweils mit durchbrochenen Linien eingezeichnet sind, und eine für beide gemeinsame Ansteuer- und Auswerteeinheit. In einer anderen Ausführungsform können selbstverständlich eine Durchflußmeßeinheit und eine Wanddickenmeßeinheit auch autark arbeiten und die Meßergebnisse in einer gemeinsamen Auswerteeinheit verrechnet werden. Nachteilig wären dann allerdings die hohen Kosten für zwei vollständig separate Meßaufnehmer sowie der erhöhte Installationsaufwand beim Anwender. In dem gezeigten Ausführungsbeispiel sind daher Durchflußmeßeinheit 32 und Wanddickenmeßeinheit 33 in einem Meßumformer integriert. Die Durchflußmeßeinheit 32 arbeitet nach dem Laufzeitdifferenzprinzip. Sie weist zwei Ultraschallwandler 34 und 35 auf, die durch einen Kommutator 36 abwechselnd als Sender und Empfänger betrieben werden. Zur Signalaufbereitung ist im Sendezweig ein Impulsformer 37 und ein Verstärker 38 vorhanden. Im Empfangszweig wird das Signal der Ultraschallwandler zunächst einem Eingangsverstärker 39 und dann einem Schmitt-Trigger 40 zugeführt. Die Wanddickenmessung wird in der Wanddickenmeßeinheit mit einem Ultraschallwandler 41 durchgeführt, der im Puls-Echo-Betrieb arbeitet. Diesem sind daher sowohl ein Sendezweig mit einem Impulsformer 42 und einem Verstärker 43 als auch ein Empfangszweig mit einem Begrenzer 44, einem Eingangsverstärker 45 und einem Schmitt-Trigger 46 aufgeschaltet. In der Ansteuer- und Auswerteeinheit gibt ein Mikrocontroller 47 programmgesteuert Impulse auf eine Leitung 48, die wahlweise durch einen Umschalter 49 dem Sendezweig der Durchflußmeßeinheit 32 oder der Wanddickenmeßeinheit 33 zugeleitet werden. Für den Kommutator 36 gibt der Mikrocontroller 47 gleichzeitig auf einer Leitung 54 ein Richtungssignal vor. Für den wahlweisen Empfang von der Durchflußmeßeinheit 32 oder der Wanddickenmeßeinheit 33 ist ein Umschalter 50 vorgesehen, der ebenfalls vom Mikrocontroller 47 gesteuert wird und das jeweilige Empfangssignal über ein Tor 51, das vom Mikrocontroller 47 für ein programmierbares Zeitfenster geöffnet wird, einer Zeitmeßeinheit 52 zuführt. An den Mikrocontroller 47, in dem aus den von der Zeitmeßeinheit 52 ermittelten Zeiten die Wanddicke und der Durchfluß berechnet werden, ist eine Einrichtung 53 zur Anzeige der Meßwerte und zur Alarmausgabe angeschlossen. Die Meßwerte können dem Anwender separat zur Verfügung gestellt sowie miteinander kombiniert werden, wobei diese Kombination u. a. der kontinuierlichen Nachführung von Durchflußkalibrierwerten dient. Die Wanddickenmessung erfolgt in vorgegebenen Zeitabständen, z. B. in Pausen der Durchflußmessung. Da sich die Wanddicke erheblich langsamer verändert als der zu messende Durchfluß, ist die durch den Mikrocontroller 47 vorgegebene Anzahl der Durchflußmeßzyklen wesentlich größer als die Anzahl der Wanddickenmeßzyklen und beträgt beispielsweise das Zehntausendfache. Die Ultraschallwandler 34 und 35 der Durchflußmeßeinheit 32 unterscheiden sich vom Ultraschallwandler 41 der Wanddickenmeßeinheit 33 in der Ultraschallfrequenz, die vorzugsweise bei der Wanddickenmessung größer ist. Die zeitliche Länge, Amplitude und Form des elektrischen Anregungssignals für die Ultraschallwandler 34, 35 und 41 ist entsprechend den unterschiedlichen Wandlereigenschaften so angepaßt, daß sich ein Ultraschallsignal mit optimalem Amplituden-Bandbreite-Produkt ergibt.

An der Meßrohrwand kann ein Temperatursensor angeordnet werden, dessen Meßwert zur Korrektur des Durchflußmeßwertes sowie zur Nachführung des Wertes der Schallgeschwindigkeit in der Meßrohrwand verwendet wird. Dieser ist in den Zeichnungen der Übersichtlichkeit wegen nicht dargestellt. Das Programm des Mikrocontrollers 47 enthält eine Plausibilitätsprüfung für die Messung der Wanddicke, welche den zeitlichen Verlauf der Wanddickenänderung bewertet.

Für die Bestimmung der Schallaufzeit in der Wand des Meßrohrs kann die Zeitdifferenz zwischen aufeinanderfolgenden Mehrfachechos ausgewertet werden.

Die Wanddickenmessung kann prinzipiell auch mit einem der Wandler, welche für die Durchflußmessung genutzt werden, erfolgen. Dabei wird die Grenzflächenreflexion an der medienseitigen Abstrahlfläche des Topfbodens ausgewertet. Voraussetzung ist allerdings, daß die Topfbodendicke wesentlich größer als die für die Wanddickenmessung verwendete Wellenlänge des Ultraschallsignales ist. Falls notwendig, kann für die Wanddickenmessung die Anregungsfrequenz des Ultraschallwandlers gegenüber derjenigen für die Durchflußmessung erhöht werden, beispielsweise durch Anregung einer Oberwelle der Piezokeramikscheibe.

Die in den erfindungsgemäßen Ultraschalldurchflußmesser integrierte Wanddickenmessung liefert eine zusätzliche Information zum Zustand einer prozeßtechnischen Anlage, die sich insbesondere auf die Betriebskosten auswirkt. Wartungsaufwendungen werden verringert, da eine Optimierung der Wartungsintervalle in Abhängigkeit der gemessenen Wanddicken erfolgen kann. Dabei wird die zusätzliche Meßfunktion in einem ohnehin vorhandenen Gerät integriert und erfordert kaum erhöhte Anschaffungs- und Installationsaufwendungen.

**Patentansprüche**

1. Ultraschalldurchflußmesser für flüssige oder gasförmige Medien

   - mit zumindest zwei Ultraschallwandlern (2, 3, 4), die an ein von dem Meßmedium durchflossenes Rohr (1) angebracht sind,
   - mit einer Ansteuer- und Auswerteeinheit, durch welche die Ultraschallwandler (2, 3, 4) als Sender und/oder als Empfänger betrieben werden und durch welche aus den Ultraschallsignalen die Wanddicke des Rohres (1) und der Durchfluß berechnet werden,

   **dadurch gekennzeichnet,**

   - daß zur Anbringung der Ultraschallwandler (2, 3, 4) ein Meßrohr (1) mit Aufnahmestellen für die Ultraschallwandler (2, 3, 4) als Bestandteil des Ultraschalldurchflußmessers vorhanden ist, auf welche zumindest die Ultraschallwandler (4) zur Wanddickenmessung eben aufgesetzt sind.

2. Ultraschalldurchflußmesser nach Anspruch 1, **dadurch gekennzeichnet,** daß bei Über- oder Unterschreiten eines vorgegebenen Grenzwertes der Wanddicke ein Meldesignal erzeugt wird.

3. Ultraschalldurchflußmesser nach Anspruch 1 oder 2, **dadurch gekennzeichnet,** daß in Abhängigkeit der Wanddicke ein Korrekturfaktor bestimmt wird, der bei der Berechnung des Durchflusses berücksichtigt wird.

4. Ultraschalldurchflußmesser nach einem der vorhergehenden Ansprüche, **dadurch gekennzeichnet,** daß Wanddickenmessungen in Pausen der Ultraschalldurchflußmessungen, zumindest aber in vorgebbaren maximalen Zeitabständen durchgeführt werden.

5. Ultraschalldurchflußmesser nach einem der vorhergehenden Ansprüche, **dadurch gekennzeichnet,** daß zwei Ultraschallwandler (34, 35) für die Ultraschalldurchflußmessung und zumindest ein weiterer Ultraschallwandler (41) für die Wanddickenmessung vorhanden sind, die über Schalter (49, 50) wahlweise mit der Ansteuer- und Auswerteeinheit verbindbar sind.

6. Ultraschalldurchflußmesser nach einem der vorhergehenden Ansprüche, **dadurch gekennzeichnet,** daß die Wand des Meßrohrs (1) abschnittsweise eben ist.

7. Ultraschalldurchflußmesser nach Anspruch 6, **dadurch gekennzeichnet,** daß der Querschnitt des Meßrohrs (1) im wesentlichen quadratisch ist.

8. Ultraschalldurchflußmesser nach einem der vorhergehenden Ansprüche, **dadurch gekennzeichnet,** daß zur Wanddickenmessung ein Ultraschallwandler (4, 41) nacheinander als Sender und Empfänger betrieben wird, der auf die Außenwand des Meßrohres (1) aufgesetzt ist, so daß er Ultraschallwellen in radialer Richtung zur Meßrohrinnenwand sendet.

9. Ultraschalldurchflußmesser nach einem der Ansprüche 5 bis 7, **dadurch gekennzeichnet,** daß zur Wanddickenmessung ein Paar von Ultraschallwandlern (29, 30) vorhanden ist, von denen der eine als Sender und der andere als Empfänger betrieben wird und die in der Weise spiegelbildlich geneigt auf der Außenseite der Meßrohrwand (31) angeordnet sind, daß eine an der Meßrohrinnenwand reflektierte Ultraschallwelle des Senders auf den Empfänger trifft.

10. Ultraschalldurchflußmesser nach einem der Ansprüche 5 bis 9, **dadurch gekennzeichnet,** daß die Wanddicke des Meßrohrs an den Aufnahmestellen für die Ultraschallwandler der Wanddickenmessung lokal erhöht ist.

11. Ultraschalldurchflußmesser nach einem der Ansprüche 5 bis 9, **dadurch gekennzeichnet,** daß in der Meßrohrwand (22) eine Aussparung vorgesehen ist, in welche als Aufnahmestelle für den Ultraschallwandler der Wanddickenmessung ein als Wanddickenmeßstrecke dienender Körper (21) eingesetzt ist, der aus dem gleichen Material wie das Meßrohr (22) besteht und bündig mit der Meßrohrinnenwand abschließt.

12. Ultraschalldurchflußmesser nach einem der Ansprüche 5 bis 9, **dadurch gekennzeichnet,** daß zur Verlängerung der Wanddickenmeßstrecke auf die Außenwand des Meßrohrs (13) ein Vorlaufkörper (11) als Aufnahmestelle für den Ultraschallwandler aufgesetzt ist.

13. Ultraschalldurchflußmesser nach einem der vorhergehenden Ansprüche, **dadurch gekennzeichnet,** daß als Ultraschallwandler piezoelektrische Wandler verwendet werden, die an den Aufnahmestellen galvanisch vom Meßrohr (27) getrennt sind.

14. Ultraschalldurchflußmesser nach einem der vorhergehenden Ansprüche, **dadurch gekennzeichnet,** daß Ultraschallwandler zur Wanddickenmessung an mehreren Stellen des Meßrohres vorhanden sind.

15. Ultraschalldurchflußmesser nach einem der vorhergehenden Ansprüche, **dadurch gekennzeichnet,** daß eine Schnittstelle zum Anschluß eines externen Ultraschallwandlers zur Wanddickenmessung vorhanden ist.

16. Ultraschalldurchflußmesser nach einem der vorhergehenden Ansprüche, **dadurch gekennzeichnet,** daß ein Ultraschallwandler zur Wanddickenmessung mit dem Meßrohr, z. B. durch Kleben, fest verbunden ist.

17. Ultraschalldurchflußmesser nach einem der Ansprüche 1 bis 15, **dadurch gekennzeichnet,** daß ein Ultraschallwandler (4) zur Wanddickenmessung durch eine Klemmvorrichtung (7) an die Aufnahmestelle gedrückt wird.

18. Ultraschalldurchflußmesser nach einem der vorhergehenden Ansprüche, **dadurch gekennzeichnet,** daß ein Ultraschallwandler (4) zur Wanddickenmessung im Gehäuse der Ansteuer- und Auswerteeinheit integriert ist.

FIG 1

FIG 2

FIG 3

FIG 4

FIG 5

FIG 6

FIG 7